# EUROPÄISCHE PATENTSCHRIFT

(11) **EP 2 324 995 B1**
(45) Veröffentlichungstag und Bekanntmachung des Hinweises auf die Patenterteilung: **15.10.2014**
(21) Anmeldenummer: 10014440.1
(22) Anmeldetag: 10.11.2010
(51) Int. Cl.: B29C 70/54, B29C 45/00, B29C 45/16

(54) **Verfahren zur Herstellung eines Faserverbundbauteils**
Method for producing a fibrous composite component
Procédé pour la fabrication d'un élément composite en fibres

(30) Priorität: 18.11.2009 DE 102009053549
(43) Veröffentlichungstag der Anmeldung: 25.05.2011
(73) Patentinhaber: Deutsches Zentrum für Luft- und Raumfahrt e.V., 51147 Köln (DE)
(72) Erfinder: Kaps, Robert, 38179 Schwülper (DE)
(74) Vertreter: Aisch, Sebastian

(56) Entgegenhaltungen:
- EP-A1- 0 780 213
- EP-A1- 1 685 947
- DE-A1-102007 060 739
- US-A1- 2003 211 194
- CAMPBELL F C ED - CAMPBELL FLAKE C: "Manufacturing processes for advanced composites, passage", 1. Januar 2004 (2004-01-01), MANUFACTURING PROCESSES FOR ADVANCED COMPOSITES, ELSEVIER ADVANCED TECHNOLOGY, OXFORD, GB, PAGE(S) 331 - 341, XP002565382, ISBN: 978-1-85617-415-2 * Seiten 335,339 *

## Beschreibung

Die Erfindung betrifft ein Verfahren zur Herstellung eines Faserverbundbauteils, wobei ein primäres Matrixmaterial in einen Faserkörper eingebracht wird, um den Faserkörper mit dem Matrixmaterial zu infiltrieren, und mindestens ein weiteres sekundäres Matrixmaterial in zumindest einem Voreilgefährdungsbereich des Faserkörpers eingebracht wird, um den Voreilgefährdungsbereich des Faserkörpers mit den sekundären Matrixmaterial derart zu infiltrieren, dass ein Voreilen des primären Matrixmaterials in den Voreilgefahrdungsbereichen verhindert wird.

Faserverbundwerkstoffe sind aufgrund ihrer Zugfestigkeit bei verhältnismäßig relativ geringem Gewicht vielseitig einsetzbar. Diese besondere Eigenschaft der Faserverbundwerkstoffe führte letztlich dazu, dass Bauteile aus diesen Werkstoffen hergestellt werden konnten, deren Einsatz ohne diese Werkstoffe nicht möglich gewesen wäre (Stichwort: Raumfahrt).

Faserverbundwerkstoffe bestehen dabei in der Regel aus zwei Hauptkomponenten, deren Verbindung erst die gewünschte Eigenschaft entstehen lässt. Bei einem Faserverbundwerkstoff wird ein aus Fasern bestehender Körper mit einem Matrixmaterial getränkt, so dass sich das Matrixmaterial mit den Fasern des Faserkörpers verbindet und so dem Werkstoff Eigenschaften verleiht, die die Komponenten einzeln betrachtet nicht aufweisen.

So wird beispielsweise ein kohlenstofffaserverstärkter Kunststoff (CFK) dadurch hergestellt, dass Kohlenstofffasern in eine Kunststoffmatrix gebettet werden, die beispielsweise aus duroplastischen oder thermoplastischen Harzen bestehen kann. Durch die Verbindung der Kohlenstofffasern mit der Kunststoffmatrix entsteht ein extrem zugfestes Material, das gegenüber mit diesen Belastungseigenschaften vergleichbaren Materialien ein wesentlich geringeres Gewicht hervorbringt.

Bei der Herstellung solcher, insbesondere komplexer integraler Faserverbundstrukturen im Injektionsverfahren besteht grundsätzlich das Problem der Kontrolle des Fließprozesses, der letztlich darauf Auswirkungen hat, ob die Faserverbundstruktur im gesamten Faserverbundbauteil ohne Fehlstellen gebildet wurde. So kommt es bei der Herstellung solcher Faserverbundstrukturen insbesondere im Injektionsverfahren zu Lufteinschlüssen oder zu einem zu hohen Porengehalt, so dass an diesen Stellen die Struktur des Bauteils nicht die gewünschte Festigkeit aufweist, da die dem Bauteil zugrunde liegende Matrix die Fasern nicht vollständig bindet. In komplexen und integralen Faserpreformen, die im Injektionsprozess mit einem Matrixharz gefüllt werden sollen, besteht in vielen Bereichen die Gefahr der Ausbildung von Zonen geringerer Faserdichte, in denen das Matrixharz schneller fortschreitet als in Bereichen mit der Standarddichte. Dieses so genannte Voreilen des Matrixharzes kann dann zu Lufteinschlüssen führen, in deren Bereiche die Fasern nicht mit Matrixharz getränkt wurde, so dass das Bauteil eine Fehlstelle aufweist.

Um dies zu verhindern schlägt beispielsweise die EP 1 685 947 A1 vor, durch eine spezielle Ausbildung des Faserkörpers das Voreilen des injizierten Matrixharzes zu unterbinden. Dieses Verfahren hat jedoch den entscheidenden Nachteil, dass es eine unter Umständen nicht erwünschte Veränderung der Passform des Bauteils erfordert und ebenfalls nicht im Inneren eines kompleren integralen Bauteils angewendet werden kann.

Aus der DE 10 2007 060 739 A1 ist des Weiteren ein Verfahren zur Herstellung eines Faserverbundbauteils bekannt, bei dem die Bereiche des Faserkörpers, welche grundsätzlich voreilgefährdet sind, mit geeigneten Maßnahmen abgekühlt werden, um so das Voreilen des Matrixharzes in diesen Bereichen zu unterbinden, da sich durch das Abkühlen des dort fließenden Matrixharzes dessen Viskosität erhöht und die Fließfähigkeit vermindert wird.

Durch das aktive Abkühlen des Faserkörpers entsteht dabei der entscheidende Nachteil, dass die Maßnahmen derart geeignet sein müssen, dass keine Leckagen an dem Formwerkzeug entstehen und beispielsweise Kühlflüssigkeit ausläuft. Außerdem müssen alle voreilgefahrdeten Bereiche mit einer entsprechenden Kühlung ausgestattet sein, was den Aufwand bei der Herstellung eines entsprechenden Faserverbundbauteils wesentlich erhöht. Letztendlich ist bei diesem Verfahren auch eine aufwendige Steuerung der Kühlung notwendig, um das Matrixharz auf die gewünschte Temperatur abzukühlen und somit die gewünschte Viskosität bereitzustellen.

Des Weiteren ist aus der EP 0 780 213 A1 ein weiteres Verfahren zur Herstellung eines Faserverbundbauteils bekannt, bei dem die Randbereiche zwischen einem Rand eines Herstellungswerkzeuges und einem Faserkörper zuvor mit einem quellfähigen Klebstoff besetzt werden. In einem ersten Polymerisationsschritt wird dann der quellfähige Quellstoff erhitzt, so dass er aufquillt und die Randbereiche, die grundsätzlich voreilgefährdet sind, besetzt. Danach, nachdem der Klebstoff ausgehärtet und polymerisiert ist, erfolgt das eigentliche Einbringen des Hauptmatrixharzes in den Faserkörper, wobei anschließend dann ein zweiter Polymerisationsschritt zur Aushärtung des Hauptmatrixmaterials erfolgt.

Im Hinblick darauf ist es Aufgabe der vorliegenden Erfindung, ein verbessertes Verfahren zur Herstellung eines Faserverbundbauteils anzugeben, welches die Ausbildung von Fehlstellen verhindert.

Die Aufgabe wird mit dem Verfahren der eingangs genannten Art erfindungsgemäß dadurch gelöst, dass das primäre Matrixmaterial zu einem Zeitpunkt injiziert wird, in dem das sekundäre Matrixmaterial noch nicht ausgehärtet ist.

Durch das Einbringen eines sekundären Matrixmaterials in jene Bereiche des Faserkörpers, in denen ein Voreilen des Matrixmaterials zu befürchten ist, werden diese voreilgefährdeten Bereiche des Faserkörpers von dem sekundären Matrixmaterial besetzt, so dass in diesen Bereichen ein Voreilen des primären Matrixmaterials (das Hauptmatrixmaterial, aus dem das Faserverbundbauteil letztlich gebildet wird) verhindert wird. So kann das primäre Matrixmaterial in den Faserkörper eingebracht werden, ohne dass ein Voreilen des Matrixmaterials in den voreilgefährdeten Bereichen befürchtet werden muss. Denn es wurde erkannt, dass das eigentliche Matrixmaterial, das primäre Matrixmaterial, nachinjiziert werden kann, ohne dass sich in den Randbereichen zwischen einem bereits eingebrachten Matrixmaterial und dem primären Matrixmaterial Poren oder Einschlüsse bilden.

Dabei wurde erkannt, dass, wenn das primäre Matrixmaterial zu einem Zeitpunkt injiziert wird, in dem das sekundäre Matrixmaterial noch nicht ausgehärtet ist, so das Bilden von Poren oder Einschlüssen wie Luft in den Randbereichen zwischen dem primären und dem sekundären Matrixmaterial verhindert wird. Somit lässt sich ein Faserkörper, der bereits teilweise mit einem sekundären Matrixmaterial infiltriert wurde, mit einem primären Matrixmaterial Nachinjizieren, ohne dass es zu Fehlstellen in den Bereichen zwischen dem sekundären und dem primären Matrixmaterial innerhalb des Bauteil kommt.

Das Matrixmaterial kann beispielsweise ein Matrixharz sein, welches bei der Herstellung von Faserverbundwerkstoffen Anwendung findet, wie beispielsweise duroplastische oder thermoplastische Harze.

Das Eindringen der Matrixmaterialien, das heißt des primären und des sekundären Matrixmaterials, kann dabei beispielsweise mittels Injizierung erfolgen, das heißt der Faserkörper wird durch das Injizieren der Matrixmaterialien infiltriert. Denkbar ist aber auch, dass das Matrixmaterial mittels eines Harzfilmes in den Faserkörper eingebracht wird, das beispielsweise so erfolgen kann, dass der Faserkörper auf einen Harzfilm gelegt wird, welcher dann durch Erhöhung der Temperatur in seiner Viskosität verändert wird, wobei aufgrund eines angelegten Unterdrucks das Matrixmaterial des Harzfilmes in den Faserkörper eingebracht wird.

Die voreilgefährdeten Bereiche eines Faserkörpers sind insbesondere jene Bereiche, die eine geringere Faserdichte gegenüber der Standarddichte des Faserkörpers aufweisen. Solche Bereiche mit geringerer Faserdichte entstehen beispielsweise am Rand des Faserkörpers, an denen der Faserkörper mit dem Formwerkzeug in Berührung kommt. Bei komplexen integralen Bauteilen können solche Bereiche mit geringerer Faserdichte auch Stoßkanten zwischen unterschiedlichen Faserkörpern sein, die zu einem gesamten Bauteil zusammengefügt werden sollen. In diesen Bereichen besteht grundsätzlich die Gefahr, dass ein eingebrachtes Matrixharz eine schnellere Fließgeschwindigkeit bzw. Injektionsgeschwindigkeit aufweist als in den restlichen Bereichen, so dass hier die Fließfront des eingebrachtes Matrixharzes voreilt.

Besonders vorteilhaft ist es dabei, wenn das sekundäre Matrixmaterial, dass die Voreilgefährdungsbereiche besetzen soll, eine höhere Viskosität aufweist als das primäre Matrixmaterial. So dringt das sekundäre Matrixmaterial relativ schnell in die Gebiete mit sehr geringerer Faserdichte vor, wobei die Fließfront des sekundären Matrixmaterials aufgrund seiner hohen Viskosität dann zum Stehen kommt, sobald das sekundäre Matrixmaterial die Gebiete mit normaler bzw. hoher Faserdichte erreicht. Das primäre Matrixmaterial, welches eine niedrigere Viskosität aufweist, infiltriert jedoch weiterhin den Faserkörper auch in den Bereichen, in denen der Faserkörper eine hohe Faserdichte aufweist, so dass letztlich der gesamte Faserkörper von den Matrixmaterialien infiltriert wird. Mit anderen Worten, das sekundäre Matrixmaterial wird so in den Faserkörper injiziert, dass die Gebiete mit geringerer Faserdichte infiltriert werden, wobei aufgrund der hohe Viskosität eine infiltration des Faserkörpers mit hoher Faserdichte durch das sekundäre Matrixmaterial nicht stattfindet. Stattdessen wird der Faserkörper in den Bereichen, in denen er eine hohe Faserdichte aufweist, nur durch das primäre Matrixmaterial infiltriert.

Dabei ist es ganz besonders vorteilhaft, wenn durch Zugabe von Thermoplasten oder Nanopartikeln die Viskosität des sekundären Matrixmaterials erhöht wird. Da häufig in Randbereichen des Faserkörpers eine geringere Faserdichte aufzufinden ist und somit diese Bereiche besonders stark durch das Voreilen eines Matrixmaterials gefährdet sind, werden diese Bereiche mit dem sekundären Matrixmaterial infiltriert, wobei durch die Zugabe von Thermoplasten oder Nanopartikeln sich die Riss- und Schlagfestigkeit in dem anschließend ausgehärteten Faserverbundbauteil erhöht, das heißt die mechanischen Eigenschaften werden verbessert. Dieser positive Nebeneffekt führt gerade in den Randbereichen des Bauteils zu einer erhöhten Festigkeit bei gleichzeitiger Verhinderung des Voreilens während des Herstellungsprozesses. Denkbar ist aber auch, dass entsprechende Thixotropiermittel zugegeben werden, um das Matrixharz zu verdicken und somit die Viskosität zu erhöhen.

Dabei wurde erkannt, dass es besonders vorteilhaft ist, wenn die Viskositäten des primären und des sekundären Matrixmaterials ein Verhältnis von 1:300 aufweisen, so dass das sekundäre Matrixmaterial eine bis zu Faktor 300 höhere Viskosität aufweist.

Ganz besonders vorteilhaft ist es, wenn die Viskosität der Matrixmaterialien in Abhängigkeit der Faserdichte so gewählt wird, dass das Faserverbundbauteil vollständig von den Matrixmaterialien infiltriert wird, ohne dass es dabei zu Voreileffekten kommt. So kann beispielsweise für Bereiche des Faserkörpers, in dem eine besonders geringe Faserdichte vorhanden ist, ein sekundäres Matrixmaterial mit einer sehr hohen Viskosität gewählt werden, damit das sekundäre Matrixmaterial diese Bereiche infiltriert und die Bereiche, in denen ausschließlich das primäre Matrixmaterial verwendet wird, von den sekundären Matrixmaterial nicht infiltriert wird.

Des Weiteren ist es aber auch denkbar, dass bei dem Injektionsprozess das primäre und das sekundäre Matrixmaterial mit jeweils unterschiedlichen Drücken injiziert werden, um so den Infiltrationsprozess innerhalb des Faserkörpers entsprechend zu steuern. So werden beispielsweise für das primäre und das sekundäre Matrixmaterial jeweils Matrixmaterialien verwendet, die sich zumindest hinsichtlich ihrer Viskosität unterscheiden, jedoch die Bereiche mit geringerer Faserdichte mit einem entsprechend niedrigeren Druck injiziert, während die normalen Bereiche des Faserkörpers mit dem primären Matrixmaterial und einem höheren Druck injiziert werden.

Denkbar ist aber auch, dass vor der eigentlichen Injektion des primären Matrixmaterials in den Faserkörper das sekundäre Matrixmaterial in die voreilgefährdeten Bereiche injiziert wird, um diese Bereich durch ein Matrixmaterial zu besetzen. Wurde für das sekundäre Matrixmaterial ein Matrixmaterial mit einer besonders hohen Viskosität gewählt, so kann der Injektionsprozess auf herkömmlichen Wege ablaufen, da aufgrund der hohen Viskosität die Bereiche mit normaler bzw. hoher Faserdichte von dem sekundären Matrixmaterial nicht infiltriert werden, sondern nur die Bereiche mit geringer Faserdichte. Anschließend kann der Injektionsprozess mit dem primären Matrixmaterial ablaufen, der dann nur noch diejenigen Bereiche des Faserkörpers infiltriert, die von dem sekundären Matrixmaterial nicht infiltriert wurden. In den meisten Fällen wird das primäre Matrixmaterial volumenmäßig den größten Teil des Faserverbundbauteils einnehmen.

Weiterhin ist es aber auch denkbar, dass das primäre und das sekundäre Matrixmaterial gleichzeitig in das Bauteil injiziert wird. Weisen beide Matrixmaterialien beispielsweise unterschiedliche Viskositäten auf, d.h., das sekundäre Matrixmaterial weist eine höhere Viskosität als das primäre Matrixmaterial auf, so infiltriert das sekundäre Matrixmaterial die Bereiche mit geringerer Faserdichte mit gleicher oder ähnlicher Geschwindigkeit wie das primäre Matrixmaterial in Bereichen mit hoher Faserdichte. Dieser Effekt ist zurückzuführen auf die unterschiedlichen Viskositäten und die somit einhergehenden unterschiedlichen inneren Reibungen der Materialien, so dass sich insgesamt eine im Wesentlichen gleichmäßige Fließgeschwindigkeit beider Matrixmaterialien ergibt.

Darüber hinaus wird die Aufgabe auch mit einem Formwerkzeug zur Herstellung eines Faserverbundbauteils in dem oben genannten Verfahren gelöst, wobei das Formwerkzeug entsprechende Mittel zum Injizieren eines primären und eines sekundären Matrixmaterials aufweist.

Die Erfindung wird anhand der beigefügten Zeichnung beispielhaft erläutert. Es zeigen:
- Figuren 1a, 1b, 1c: schematische Darstellung der Injektion eines Matrix- materials in einer Faserplatte mit Voreileffekten;
- Figuren 2a, 2b: schematische Darstellung der Injektion ohne Voreilef- fekte.

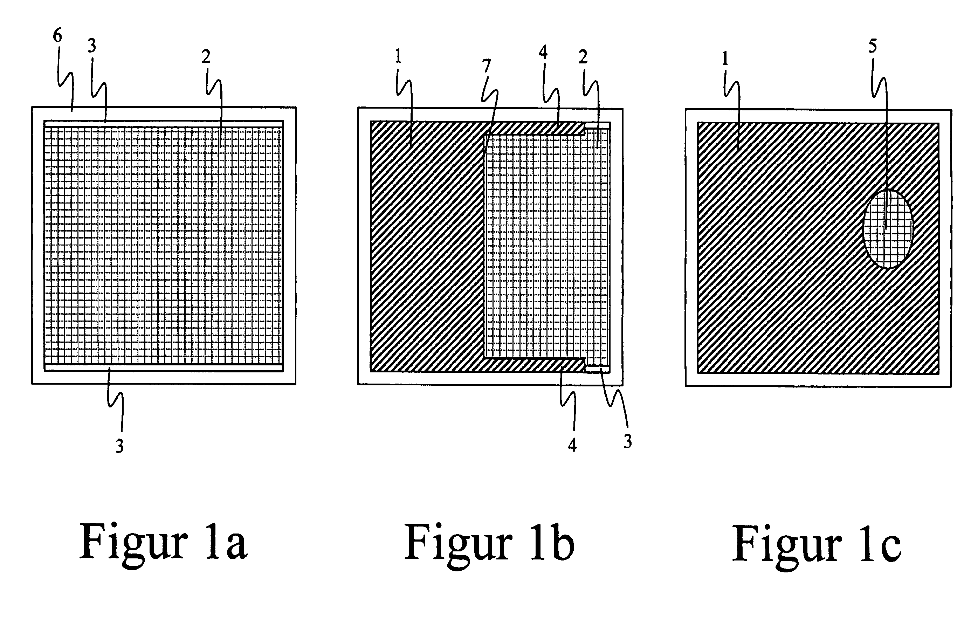

Die Figuren 1a, 1b und 1c zeigen schematisch die Injektion eines Matrixmaterials 1 in einen Faserkörper 2, wobei sich an den Randbereichen 3 ein Voreileffekt 4 bildet, der letztlich zu einem Lufteinschluss und somit einer Fehlstelle 5 in dem fertigen Bauteil führt.

Figur 1 a zeigt die Anfangssituation. Ein Faserkörper 2 bestehend aus einem entsprechenden Fasermaterial soll durch ein Matrixharz 1, beispielsweise ein thermoplastisches oder duroplastisches Matrixharz infiltriert werden, um nach Aushärtung des Matrixharzes 1 ein Faserverbundbauteil zu bilden. Der Faserkörper 2 ist dazu in einem Formwerkzeug 6 angeordnet, damit mit Hilfe des Injektionsverfahrens das Matrixmaterial 1 in den Faserkörper 2 injiziert werden kann.

Wie in Figur 1 a zu erkennen ist, bildet sich zwischen dem Formwerkzeug 6 und dem Faserkörper 2 am Rand des Faserkörpers 2 ein Randbereich 3, in dem bauartbedingt eine geringe bis keine Faserdichte aufzufinden ist. Dieser Randbereich 3 ist demnach grundsätzlich ein Voreilgefährdungsbereich, da aufgrund der geringeren Faserdichte und somit des geringeren Widerstandes ein Voreilen des Harzes 1 zu befürchten ist. Solche Voreilgefährdungsbereiche 3 können aber auch an Stoßkanten zweier unterschiedlicher Faserkörper entstehen, wenn beispielsweise komplexe Faserverbundstrukturen hergestellt werden sollen.

In Figur 1b wurde nunmehr das Matrixharz 1 teilweise in den Faserkörper 2 injiziert. Dabei ist zu erkennen, dass es in den Randbereichen 3, die gegenüber dem eigentlichen Faserkörper eine geringere Faserdichte aufweisen, zu entsprechenden Voreileffekten 4 gekommen ist, da hier das Matrixmaterial 1 eine schnellere Fließgeschwindigkeit aufweist. Es entsteht aufgrund der unterschiedlichen Fließgeschwindigkeiten in unterschiedlichen Bereichen des Faserkörpers 2 eine nicht gleichmäßige Fließfront 7, so dass der Faserkörper 2 nicht gleichmäßig von dem Matrixmaterial 1 infiltriert wird.

Beim weiteren Voranschreiten des Injektionsprozesses, wie dies in Figur 1c dargestellt ist, führt das Voreilen 4 des Matrixmaterials 1 zu einem Lufteinschluss 5. In diesem Bereich 5 wurde der Faserkörper 2 nicht mit dem Matrixmaterial 1 getränkt, so dass dieser Bereich 5 nach Abschluss des Herstellungsprozesses nicht gehärtete Fasern aufweist. Dieses Faserverbundbauteil, wie es in Figur 1c dargestellt ist, weist somit eine Fehlstelle 5 auf, die die Stabilität des gesamten Faserverbundbauteils beeinträchtigt und somit nicht verwendet werden kann. Vielmehr ist dieses Bauteil Ausschuss.

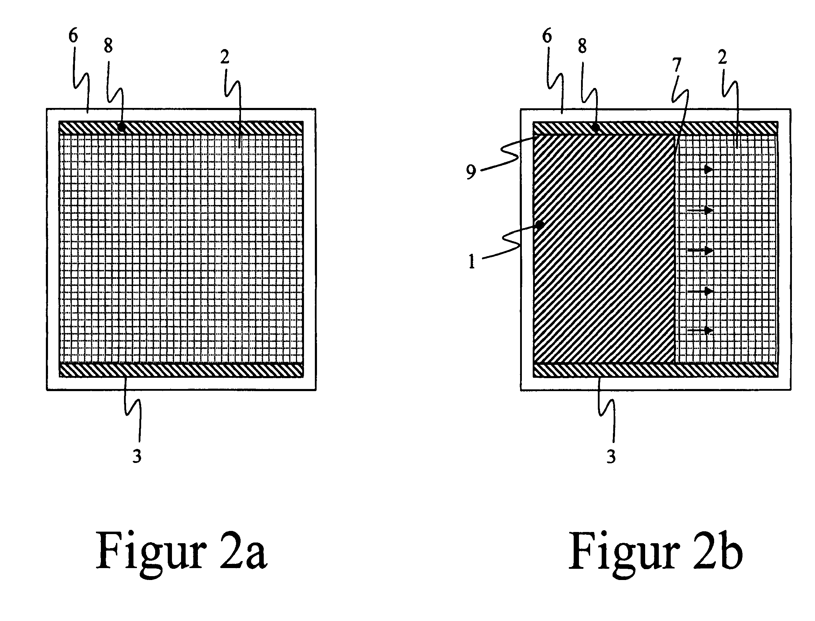

Die Figuren 2a und 2b zeigen schematisch, wie der Voreileffekt 4 mittels des vorliegenden Verfahrens verhindert werden kann. Wie in Figur 1 a weist auch in Figur 2a der Faserkörper 2, der innerhalb eines Formwerkzeuges 6 angeordnet ist, einen Randbereich 3 auf, in dem aufgrund der geringeren Faserdichte in diesem Bereich 3 mit Voreileffekten zu rechnen ist. Gemäß der vorliegenden Erfindung wird nun in diesem Voreilgefährdungsbereich 3 zunächst ein sekundäres Matrixmaterial 8 injiziert, welches gegenüber dem eigentlichen primären Matrixmaterial 1 eine höhere Viskosität aufweist. Das sekundäre Matrixmaterial 8 breitet sich nun in diesem Randbereich 3 entsprechend aus und infiltriert somit diesen Bereich 3. Da jedoch das sekundäre Matrixmaterial 8 eine sehr hohe Viskosität aufweist, kommt die Infiltration des Faserkörpers 2 praktisch zum Erliegen, wenn das sekundäre Matrixmaterial 8 Bereiche mit hoher Faserdichte erreicht. Denn aufgrund der hohen Viskosität können diese Bereiche des Faserkörpers von dem sekundären Matrixmaterial 8 nicht infiltriert werden. Der Voreilgefährdungsbereich 3 ist somit nun von dem sekundären Matrixmaterial 8 besetzt, so dass ein Voreilen des eigentlichen primären Matrixmaterials 1 in diesem Bereich ausgeschlossen werden kann. Das Faserverbundbauteil ist somit ein aus dem primären 1 und sekundären Matrixmaterial 8 integral gebildetes Bauteil, d.h. das Bauteil besteht nach Beendigung der Herstellung sowohl aus dem primären 1 als auch sekundären Matrixmaterial 8.

Dabei ist auch denkbar, dass der Voreilgefährdungsbereich 3 durch ein so genanntes Siegelkitt als sekundäres Matrixmaterial 8 besetzt wird, um das Voreilen des primären Matrixmaterials 1 zu verhindern. Allerdings bilden dann das primäre 1 und das sekundäre Matrixmaterial 8 kein integral hergestelltes Bauteil mehr, so dass der Voreilgefährdungsbereich 3, der mit dem Siegelkitt besetzt ist, nach dem Aushärten des primären Matrixmaterials 1 von dem Bauteil getrennt werden muss.

Nachdem die Voreilgefährdungsbereiche 3 nunmehr von dem sekundären Matrixmaterial 8 besetzt sind, wird das eigentliche primäre Matrixmaterial 1 in den Faserkörper 2 injiziert, um so den Faserkörper vollständig mit Harz zu tränken. Dies ist in Figur 2b dargestellt. Aufgrund der vergleichbar geringeren Viskosität des primären Matrixmaterials 1 gegenüber dem sekundären Matrixmaterial 8 wird der Faserkörper 2 gleichmäßig von dem primären Matrixmaterial 1 getränkt, so dass sich eine gleichmäßige Fließfront 7 bildet. Wie in Figur 2b zu erkennen ist, wird ein Voreilen des Matrixmaterials 1 entsprechend unterbunden, so dass durch die gleichmäßige Tränkung des Faserkörpers Einschlüsse wie beispielsweise Luft, wie dies in Figur 1c im Bereich 5 entstanden ist, verhindert werden.

In den Randbereichen 9 zwischen dem sekundären Matrixmaterial 8 und dem primären Matrixmaterial 1 bilden sich darüber hinaus keine Poren oder anderweitige Einschlüsse, so dass nach dem Aushärten der beiden Matrixmaterialien ein vollständig getränktes und ausgehärtetes Faserverbundbauteil entsteht.

Wurde beispielsweise die Viskosität des sekundären Matrixmaterials 8 durch Zugabe von Thermoplasten erhöht, so hat dies des Weiteren auch den vorteilhaften Nebeneffekt, dass das Faserverbundbauteil in den Randbereichen, die ja gerade voreilgefährdet sind, eine verbesserte Materialeigenschaft entstanden ist, da Thermoplasten grundsätzlich die Rissfestigkeit eines Faserverbundbauteils erhöhen. Gerade in Randbereichen eines solchen Bauteils ist dies besonders vorteilhaft.

Für das primäre und sekundäre Matrixmaterial lassen sich dabei auch zwei gleiche Matrixharze verwenden, die jedoch eine unterschiedliche Modifikation aufweisen, um so die Viskosität entsprechend zu verändern. Die Injektion des primären und des sekundären Matrixmaterials kann dabei allerdings auch zur gleichen Zeit erfolgen, wobei sich aufgrund der unterschiedlichen Viskositäten eine gleichmäßige Fließfront bildet. Die Viskosität kann dabei in Abhängigkeit der entsprechenden Faserdichte gewählt werden.

## Patentansprüche

1. Verfahren zur Herstellung eines Faserverbundbauteils, wobei ein primäres Matrixmaterial (1) in einen Faserkörper (2) eingebracht wird, um den Faserkörper (2) mit dem Matrixmaterial (1) zu infiltrieren, und mindestens ein weiteres sekundäres Matrixmaterial (8) in zumindest einen Voreilgefährdungsbereich (3) des Faserkörpers (2) eingebracht wird, um den Voreilgefährdungsbereich (3) des Faserkörpers (2) mit dem sekundären Matrixmaterial (8) derart zu infiltrieren, dass ein Voreilen des primären Matrixmaterials (1) verhindert wird, **dadurch gekennzeichnet, dass** das primäre Matrixmaterial zu einem Zeitpunkt injiziert wird, in dem das sekundäre Matrixmaterial noch nicht ausgehärtet ist.

2. Verfahren nach Anspruch 1, **dadurch gekennzeichnet, dass** das Matrixmaterial (1, 8) ein Matrixharz ist.

3. Verfahren nach Anspruch 1 oder 2, **dadurch gekennzeichnet, dass** das sekundäre Matrixmaterial (8) mittels Injizierung oder mittels eines Harzfilms in den Faserkörper eingebracht wird.

4. Verfahren nach einem der vorhergehenden Ansprüche, **dadurch gekennzeichnet, dass** der Voreilgefährdungsbereich (3) des Faserkörpers (2) eine geringere Faserdichte aufweist.

5. Verfahren nach einem der vorhergehenden Ansprüche, **dadurch gekennzeichnet, dass** der Voreilgefährdungsbereich (3) des Faserkörpers (2) durch einen Randbereich (3) des Faserkörpers (2) und/oder durch eine Stoßkante innerhalb des Faserkörpers (2) gebildet wird.

6. Verfahren nach einem der vorhergehenden Ansprüche, **dadurch gekennzeichnet, dass** das sekundäre Matrixmaterial (8) eine höhere Viskosität als das primäre Matrixmaterial (1) hat.

7. Verfahren nach Anspruch 6, **gekennzeichnet durch** Zugabe von Thermoplasten, Nanopartikel und/oder Thixotropiermittel zu dem sekundären Matrixmaterial (8) zur Erhöhung der Viskosität.

8. Verfahren nach Anspruch 6 oder 7, **dadurch gekennzeichnet, dass** die Viskositäten zwischen dem primären (1) und dem sekundären Matrixmaterial (8) ein Verhältnis von im Wesentlichen 1:300 aufweisen.

9. Verfahren nach einem der vorhergehenden Ansprüche, **dadurch gekennzeichnet, dass** die Viskosität der Matrixmaterialien (1, 8) in Abhängigkeit der Faserdichte gewählt wird.

10. Verfahren nach einem der vorhergehenden Ansprüche, **gekennzeichnet durch** Injizieren des primären (1) und des sekundären Matrixmaterials (8) jeweils mit unterschiedlichen Drücken.

11. Verfahren nach einem der vorhergehenden Ansprüche, **gekennzeichnet durch** Einbringen des primären Matrixmaterials (1) zu einem späteren Zeitpunkt in Abhängigkeit eines Polymerisationszustandes des sekundären Matrixmaterials (8).

12. Verfahren nach einem der Ansprüche 1 bis 10, **gekennzeichnet durch** Einbringen des primären (1) und des sekundären Matrixmaterials (8) gleichzeitig.

## Claims

1. Method for producing a fibrous composite component, involving introducing a primary matrix material (1) into a fibrous body (2) in order to infiltrate the fibrous body (2) with the matrix material (1), and introducing at least one further, secondary matrix material (8) into at least one region at risk of premature advancement (3) of the fibrous body (2) in order to infiltrate the region at risk of premature advancement (3) of the fibrous body (2) with the secondary matrix material (8) in such a way that premature advancement of the primary matrix material (1) is prevented, **characterized in that** the primary matrix material is injected at a point in time at which the secondary matrix material has not yet fully cured.

2. Method according to Claim 1, **characterized in that** the matrix material (1, 8) is a matrix resin.

3. Method according to Claim 1 or 2, **characterized in that** the secondary matrix material (8) is introduced into the fibrous body by means of injection or by means of a resin film.

4. Method according to one of the preceding claims, **characterized in that** the region at risk of premature advancement (3) of the fibrous body (2) has a lower fibre density.

5. Method according to one of the preceding claims, **characterized in that** the region at risk of premature advancement (3) of the fibrous body (2) is formed by a peripheral region (3) of the fibrous body (2) and/or by an abutting edge within the fibrous body (2).

6. Method according to one of the preceding claims, **characterized in that** the secondary matrix material (8) has a higher viscosity than the primary matrix material (1).

7. Method according to Claim 6, **characterized by** adding thermoplastics, nanoparticles and/or thixotropic agents to the secondary matrix material (8) to increase the viscosity.

8. Method according to Claim 6 or 7, **characterized in that** the viscosities between the primary matrix material (1) and the secondary matrix material (8) are in a ratio of substantially 1:300.

9. Method according to one of the preceding claims, **characterized in that** the viscosity of the matrix materials (1, 8) is chosen on the basis of the fibre density.

10. Method according to one of the preceding claims, **characterized by** injecting the primary matrix material (1) and the secondary matrix material (8) each with different pressures.

11. Method according to one of the preceding claims, **characterized by** introducing the primary matrix material (1) at a later point in time on the basis of a state of polymerization of the secondary matrix material (8).

12. Method according to one of Claims 1 to 10, **characterized by** introducing the primary matrix material (1) and the secondary matrix material (8) at the same time.

## Revendications

1. Procédé pour la fabrication d'un élément composite en fibres, dans lequel on introduit un matériau de matrice primaire (1) dans un corps en fibres (2), afin d'infiltrer le corps en fibres (2) avec le matériau de matrice (1), et on introduit au moins un autre matériau de matrice secondaire (8) dans au moins une zone de risque d'avance (3) du corps en fibres (2), afin d'infiltrer la zone de risque d'avance (3) du corps en fibres (2) avec le matériau de matrice secondaire (8), d'une manière telle qu'une avancée du matériau de matrice primaire (1) soit empêchée, **caractérisé en ce que** l'on injecte le matériau de matrice primaire à un instant où le matériau de matrice secondaire n'est pas encore durci.

2. Procédé selon la revendication 1, **caractérisé en ce que** le matériau de matrice (1, 8) est une résine de matrice.

3. Procédé selon la revendication 1 ou 2, **caractérisé en ce que** l'on introduit le matériau de matrice secondaire (8) dans le corps en fibres au moyen d'une injection ou au moyen d'un film de résine.

4. Procédé selon l'une quelconque des revendications précédentes, **caractérisé en ce que** la zone de risque d'avance (3) du corps en fibres (2) présente une densité de fibres plus faible.

5. Procédé selon l'une quelconque des revendications précédentes, **caractérisé en ce que** la zone de risque d'avance (3) du corps en fibres (2) est formée par une zone de bord (3) du corps en fibres (2) et/ou par un rebord à l'intérieur du corps en fibres (2).

6. Procédé selon l'une quelconque des revendications précédentes, **caractérisé en ce que** le matériau de matrice secondaire (8) présente une viscosité plus élevée que le matériau de matrice primaire (1).

7. Procédé selon la revendication 6, **caractérisé par** l'addition de thermoplastiques, de nanoparticules et/ou d'agents thixotropes au matériau de matrice secondaire (8) pour augmenter la viscosité.

8. Procédé selon la revendication 6 ou 7, **caractérisé en ce que** les viscosités entre les matériaux de matrice primaire (1) et secondaire (8) présentent un rapport essentiellement de 1:300.

9. Procédé selon l'une quelconque des revendications précédentes, **caractérisé en ce que** l'on choisit la viscosité des matériaux de matrice (1, 8) en fonction de la densité des fibres.

10. Procédé selon l'une quelconque des revendications précédentes, **caractérisé par** l'injection du matériau de matrice primaire (1) et secondaire (8) chaque fois avec des pressions différentes.

11. Procédé selon l'une quelconque des revendications précédentes, **caractérisé par** l'introduction du matériau de matrice primaire (1) à un instant plus tarif en fonction d'un état de polymérisation du matériau de matrice secondaire (8).

12. Procédé selon l'une quelconque des revendications 1 à 10, **caractérisé par** l'introduction du matériau de matrice primaire (1) et secondaire (8) simultanément.
